# EUROPEAN PATENT APPLICATION

(11) **EP 4 625 654 A1**
(43) Date of publication of application: **01.10.2025**
(21) Application number: 24206667.8
(22) Date of filing: 15.10.2024
(51) Int. Cl.: H01M 50/22, H01M 50/229, H01M 50/238, H01M 50/242, H01M 50/247

(54) **BATTERY WITH A PRESSURE MANAGEMENT DEVICE**

(30) Priority: 28.03.2024 US 202463570994 P; 04.10.2024 US 202418906504
(71) Applicant: Meta Platforms Technologies, LLC, Menlo Park, CA 94025 (US)
(72) Inventor: Wang, Wei, Menlo Park (US); Chen, Di, Menlo Park (US)
(74) Representative: Murgitroyd & Company

(57) **Abstract**

In this disclosure, a battery pack/module with pressure control device integrated has been introduced to provide more efficient packing in system. This design reduces and deaccelerates fading/aging, impedance growth, and dimensional instability over product life. Moreover, it also helps protect the battery from damage with improved reliability. This technology enables better industrial design, e.g., for XR and wearable systems.

## Description

### CROSS-REFERENCE TO RELATED APPLICATIONS

This application claims priority to U.S. Patent Provisional Application No. 63/570,994, titled "Battery with a Pressure Management Device," filed on March 28, 2024.

### TECHNICAL FIELD

The present disclosure is directed to battery systems and enclosures.

### BACKGROUND

For many electric devices, such as artificial reality (XR) devices, Li-ion batteries (LIB) provide a power without needing a power cable to an external source, which improves user experience.

Battery degradation introduces capacity fading, impedance growth and dimensional change such as swelling over product life. For consumable electronics, the battery module/pack is normally designed to accommodate battery swelling with a "maximum well budget" which is a void space inside the pack or within the system to let the battery free expand and may also function as a gap to accommodate mechanical movements resulted from mechanical inputs such as shock, drop, vibration, etc. This swell budget is typically ~ 3% - 20% of the battery enclosure, depending on chemistry and design. Some devices, such as XR headsets and on wrist wearable devices, need better ergonomics and design to enable all day wearing.

### SUMMARY

The present invention provides a method for manufacturing a battery with a pressure management device and a battery assembly with a pressure management device as defined in the appended claims.

In accordance with a first aspect, there is provided a method for manufacturing a battery, with a pressure management device, the method comprising:
cutting a die, into a specified shape, from a rolled wafer;
assembling a battery pack comprising one or more battery cells attached to the die;
forming an adhesive layer on at least one side of the battery pack;
attaching the battery pack to a substrate using the adhesive layer;
forming the pressure management device by:
   surrounding foam and/or elastomer insulation around at least a portion of the battery pack; and
   curing the foam and/or elastomer insulation; and
adding a cover forming, with the substrate, an enclosure of:
   the battery pack, and
   the foam and/or elastomer insulation.

Forming the pressure management device may further comprise prodding the foam and/or elastomer insulation around the battery pack.

The adhesive layer may be a first adhesive layer and wherein the method may further comprise forming a second adhesive layer on the battery pack on a side opposite the first adhesive layer.

The foam and/or elastomer insulation may comprise low density compressible foam.

The portion of the battery pack, that the low density compressible foam surrounds, may comprise at least an area between the battery pack and the cover.

The substrate may comprise at least three sides, a first of which the battery pack is attached to using the adhesive layer;
and the portion of the battery pack, that the foam and/or elastomer insulation surrounds, may comprise at least A) a first area between the battery pack and the cover, B) a second area between the battery pack and a second of the three sides, and C) a third area between the battery pack and a third of the three sides.

The battery pack may comprise at least six sides, and the foam and/or elastomer insulation around at least a portion of the battery pack may be provided around at least five of the six sides.

The battery pack may comprise at least two battery cells.

The at least one side of the substrate may be curved; and at least one side, of at least one of the one or more battery cells, may be curved to match the curve of the substrate.

The surrounding foam and/or elastomer insulation may have an uncompressed thickness of 5um to 3mm.

In accordance with a second aspect, there is provided a battery assembly with a pressure management device, the battery assembly comprising:
a battery pack comprising one or more battery cells;
a substrate;
an adhesive layer that attaches the battery back to the substrate;
the pressure management device comprising foam and/or elastomer insulation compressed around at least a portion of the battery pack; and
a cover forming, with the substrate, an enclosure of:
   the battery pack, and
   the foam and/or elastomer insulation.

The enclosure may be further formed using components, of a device into which the battery assembly is integrated, providing a gap filler within the battery pack.

The foam and/or elastomer insulation may comprise polyurethane and/or silicone.

The foam and/or elastomer insulation may comprise one or more of: expendable graphite, fullerene, carbon nanotubes, carbon nanofibers, graphene, activated carbon, amorphous carbon, boron nitride, aluminum oxide, aluminum nitride, or any combination thereof.

A density of the foam and/or elastomer insulation may be approximately 0.1 gram per cubic centimeter.

The foam and/or elastomer insulation may comprise low density compressible foam.

The portion of the battery pack, that the low density compressible foam surrounds, may comprise at least an area between the battery pack and the cover.

The substrate may comprise at least three sides, a first of which the battery pack is attached to using the adhesive layer; and
the portion of the battery pack, that the foam and/or elastomer insulation surrounds, may comprise at least A) a first area between the battery pack and the cover, B) a second area between the battery pack and a second of the three sides, and C) a third area between the battery pack and a third of the three sides.

At least one side of the substrate may be curved; and at least one side, of at least one of the one or more battery cells, may be curved to match the curve of the substrate.

The surrounding foam and/or elastomer insulation may have an uncompressed thickness of 5um to 3 mm.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figures 4A-C are schematic illustrations of Battery pack/module designs with an enclosure/tray.
Figures 4D-E are schematic illustrations of Battery pack/module designs without enclosure.
Figure 5A is a schematic illustration of a curved battery pack with a single battery cell.
Figure 5B is a schematic illustration of a curved battery pack or module with two or more battery cells.
Figure 5C is a schematic illustration of a cuboidal battery pack with single or multiple battery cells.

The techniques introduced here may be better understood by referring to the following Detailed Description in conjunction with the accompanying drawings, in which like reference numerals indicate identical or functionally similar elements.

### DETAILED DESCRIPTION

A battery pack architecture for mixed reality applications is disclosed herein with an integrated pressure control device to reduce capacity fading, impedance growth, and dimensional instability over product life. In this disclosure, a battery pack/module with pressure control device integrated has been introduced to provide more efficient packing in-system. This also helps protect the battery from damage and improves reliability. This technology enables better industrial design, e.g., for XR or wearable systems.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

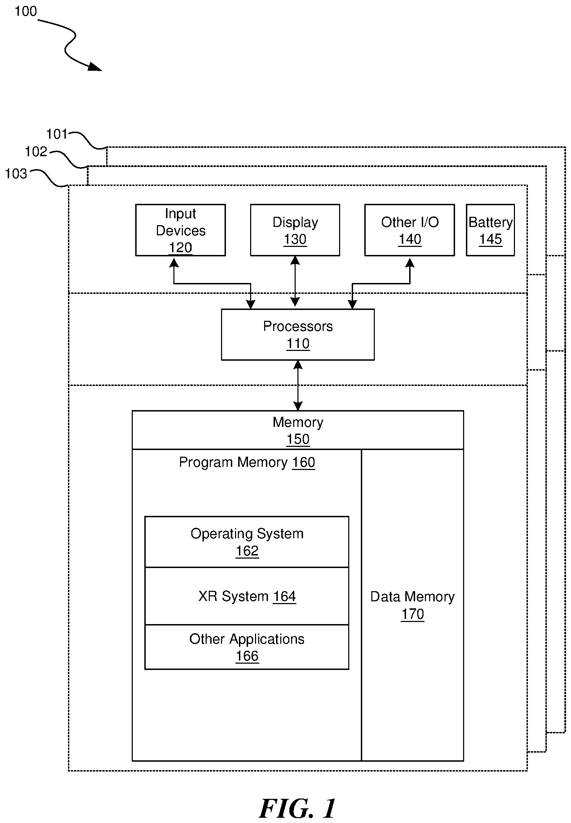

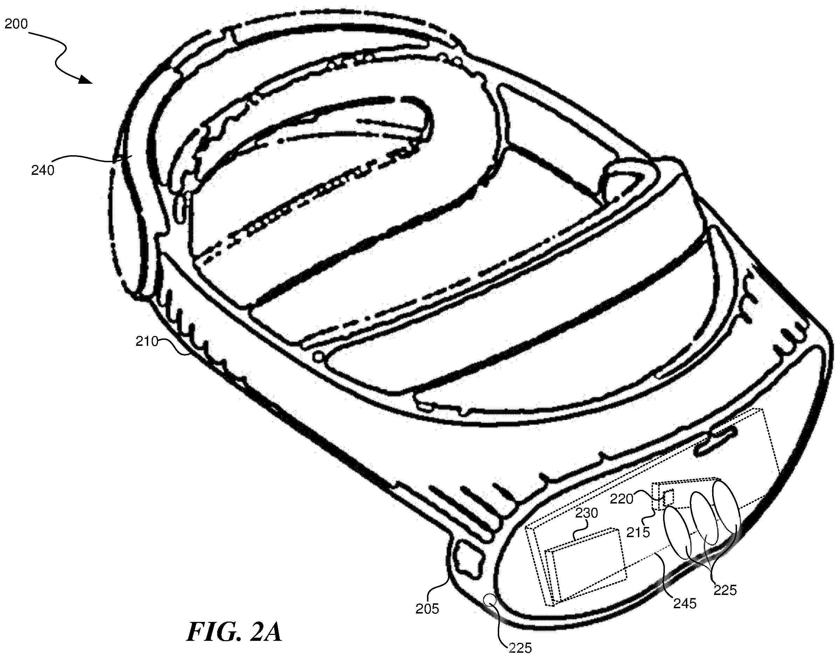

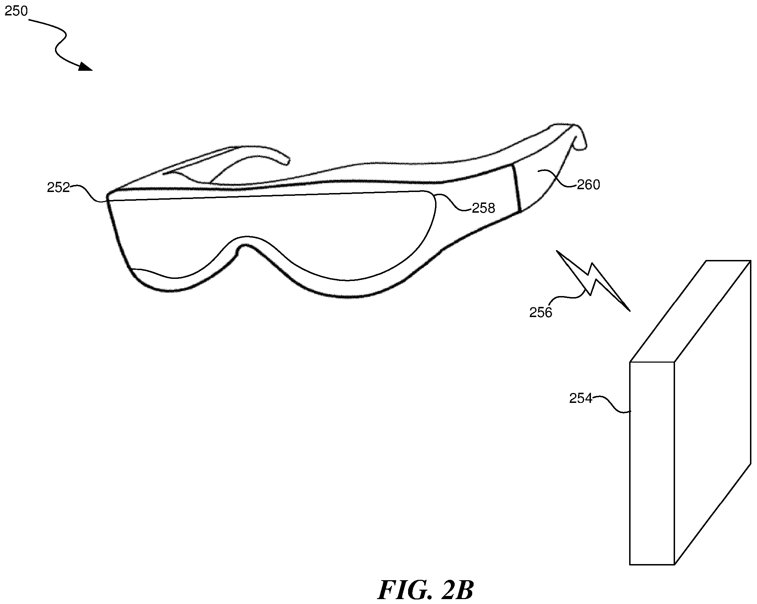

Several implementations are discussed below in more detail in reference to the figures. Figure 1 is a block diagram illustrating an overview of devices on which some implementations of the disclosed technology can operate. The devices can comprise hardware components of a computing system 100. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data. Computing system 100 can include a battery 145, as described herein.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, grids, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, XR system 164, and other application programs 166. Memory 150 can also include data memory 170 that can include configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

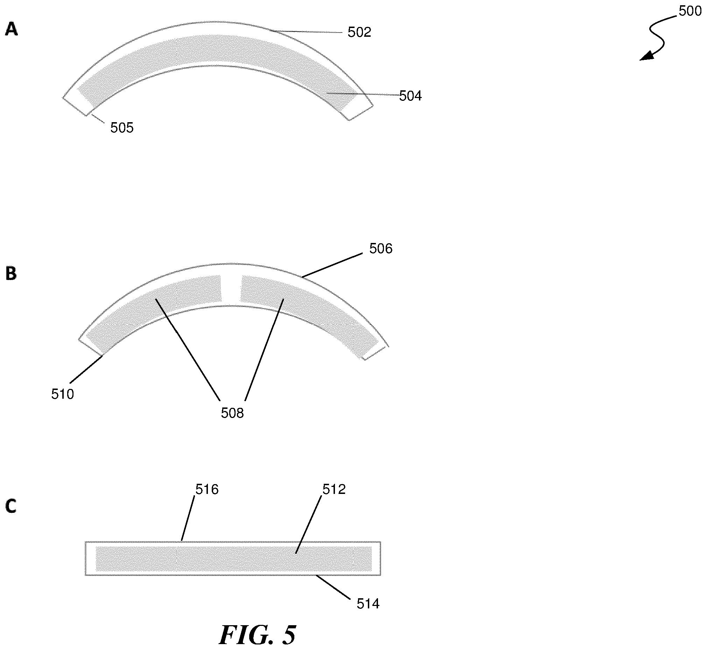

Figure 2A is a wire diagram of a virtual reality head-mounted display (HMD) 200, in accordance with some embodiments. In this example, HMD 200 also includes augmented reality features, using passthrough cameras 225 to render portions of the real world, which can have computer generated overlays. The HMD 200 includes a front rigid body 205, a band 210, and a battery enclosure 240. In various implementations, the battery can either in the front module or the rear module. The front rigid body 205 includes one or more electronic display elements of one or more electronic displays 245, an inertial motion unit (IMU) 215, one or more position sensors 220, cameras and locators 225, and one or more compute units 230. The position sensors 220, the IMU 215, and compute units 230 may be internal to the HMD 200 and may not be visible to the user. In various implementations, the IMU 215, position sensors 220, and cameras and locators 225 can track movement and location of the HMD 200 in the real world and in an artificial reality environment in three degrees of freedom (3DoF) or six degrees of freedom (6DoF). For example, locators 225 can emit infrared light beams which create light points on real objects around the HMD 200 and/or cameras 225 capture images of the real world and localize the HMD 200 within that real world environment. As another example, the IMU 215 can include e.g., one or more accelerometers, gyroscopes, magnetometers, other non-camera-based position, force, or orientation sensors, or combinations thereof, which can be used in the localization process. One or more cameras 225 integrated with the HMD 200 can detect the light points. Compute units 230 in the HMD 200 can use the detected light points and/or location points to extrapolate position and movement of the HMD 200 as well as to identify the shape and position of the real objects surrounding the HMD 200. Battery enclosure 240, in this example, is a curved enclosure housing one or more battery cells, as shown in Figure 5.

The electronic display(s) 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects. HMD 252 and/or processing component 254 can include a battery, as described herein.

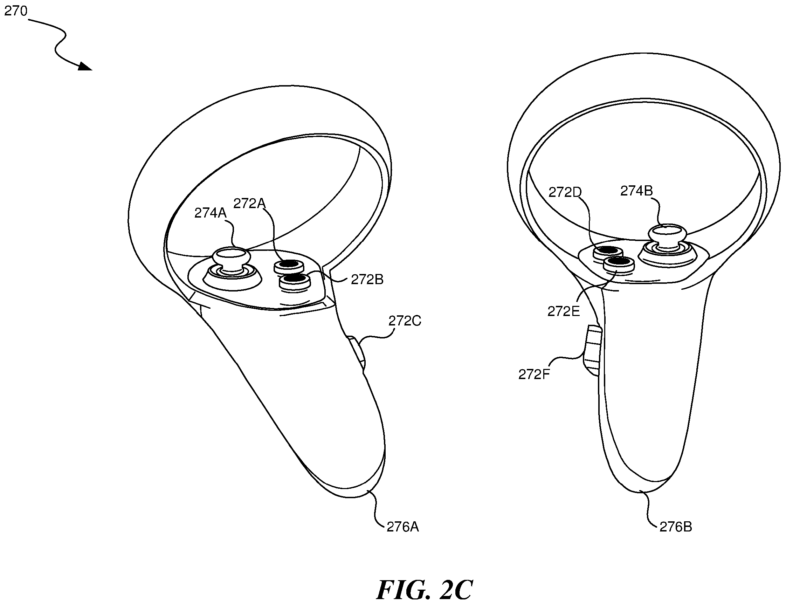

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects. Controller 276A and/or 276B can include a battery, as described herein.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

In various implementations, the battery systems described herein can be included in other electronic devices such as mobile phones, wearables (e.g., watches or other wrist wearables, rings, necklaces, earrings, clothing wearables, etc.).

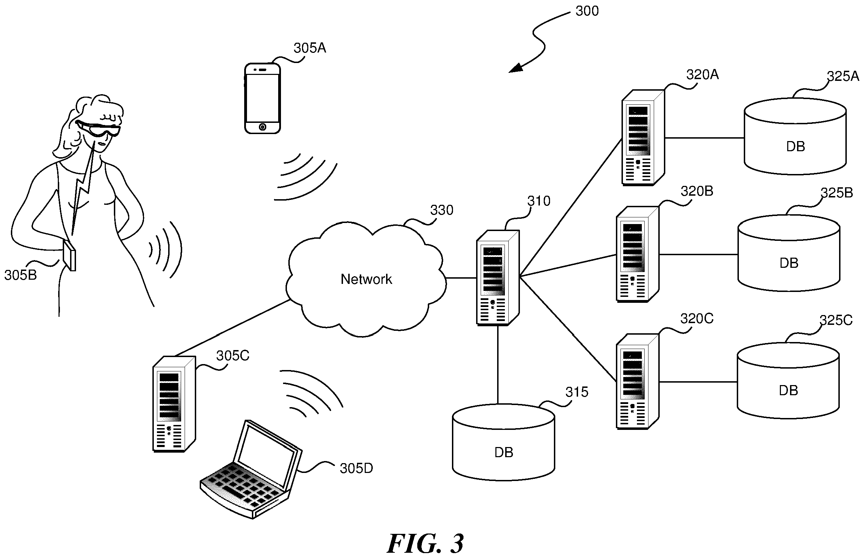

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

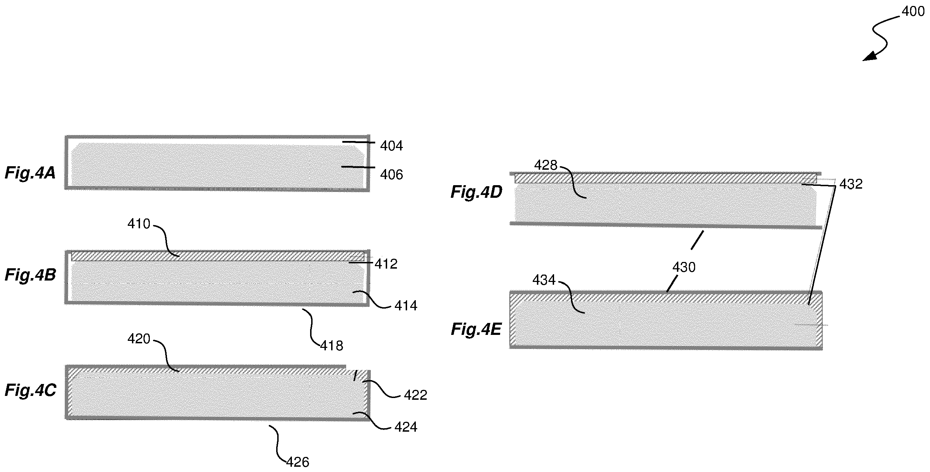

Figures 4B-E show schematic illustrations 400 of a battery pack (406, 414, 424, 428, or 434) with an integrated pressure management device (412, 422, or 432). Instead of leaving a swell budget as void space 404 to accommodate battery 406 swelling over cycling (as shown in Figure 4A), this new design can introduce an ultra-low density compressible foam material 412, 422, or 432 on top and/or bottom of the battery cell (Figures 4B and 4D) or all around the battery cell (Figures 4C and 4E) or partial coverage on top/bottom/all around the battery cell. In some implementations, neighboring components 430 (e.g., technical components of the device into which the battery is integrated) provide a gap filler within the battery pack. In some implementations, the composition, porosity, and/or thickness of the foam can be tunable. This compressible foam will help maintain a compressible force on the battery cell during operation throughout the whole product life.

A battery assembly with a pressure management device, the battery assembly can comprise: a battery pack including one or more battery cells (414, 424, 428, or 434); a substrate 418 or 426; an adhesive layer (between 414 and 418 or between 424 and 426) that attaches the battery back 414 or 424 to the substrate 418 or 426; the pressure management device including foam and/or elastomer insulation 412, 422, or 432 compressed around at least a portion of the battery pack 414, 424, 428, or 434; and a cover 410 or 420 forming, with the substrate, an enclosure of: the battery pack, and the foam and/or elastomer insulation.

In various implementations, the materials/compositions of the pressure management device can include polyurethane (PU), silicone, or other elastomers, etc., can be pure polymer or filled composites with fillers such as expendable graphite, carbon nanostructures (fullerene, carbon nanotubes, carbon nanofibers, graphene, activated carbon, amorphous carbon, etc.), boron nitride, aluminum oxide, aluminum nitride, etc. (which can provide enhanced thermal or mechanical properties). In various implementations, the pressure management device can have a porosity of 1-99%; can have a thickness of 5um to 3 mm (uncompressed); can have a density of 0.1gram / cubic centimeter; and/or can have a compression % in the module/pack of 0-95%.

In some implementations, a battery with a pressure management device can be manufactured by - cutting a die, into a specified shape, from a rolled wafer; assembling a battery pack including one or more battery cells attached to the die; forming an adhesive layer on at least one side of the battery pack; attaching the battery pack to a substrate using the adhesive layer; forming the pressure management device by surrounding foam and/or elastomer insulation around at least a portion of the battery pack; curing the foam and/or elastomer insulation; and adding a cover forming, with the substrate, an enclosure of: the battery pack, and foam and/or elastomer insulation.

In some implementations, the pressure management device can be applied to a battery by rolling goods die cut into desired shapes and attaching and assembling in the pack process; making both sides tacky and replace pressure sensitive adhesive (PSA) for attaching cell to substrate; and filling the elastomer into the pack as a potting or gap filler and curing and prodding foam insulation.

As shown in Figures 5A-5C (500), in various implementations, the battery pack assembly can include a single cell 504 or 512 or multiple cells 508 with two or more cells connected in series or in parallel. The battery pack assembly can include cover (e.g., 502, 506, or 516) that, with a substrate (e.g., 505, 510, or 514), enclose the battery pack and foam and/or elastomer insulation. The battery cell can be a pouch cell, or hard case cell in any shape such as cuboidal, curved, shaped, chamfered, etc. Figure 5A is a schematic illustration of a curved battery pack with a single battery cell 504. Figure 5B is a schematic illustration of a curved battery pack or module with two or more battery cells 508. The two or more battery cells can be placed either side by side or in a stacked up configuration. Figure 5C is a schematic illustration of a cuboidal battery pack with single or multiple battery cells 512. The two or more battery cells can be placed either side by side or in a stacked up configuration.

As compared to existing battery systems, the disclosed technology can provide more efficient packing which enables better industrial design, e.g., for XR and wearable systems. It also provides better performances due to the applied compression force on the battery cell helping the battery cell maintain: better capacity retention over product life; less or no dimensional instability for example, thickness swelling over product life; less impedance growth over product life; better consistency of performance and less cell-to-cell variation; (for curved cells) smaller curvature change over product life; (for stacked cell designs), higher voltage chemistry design; and/or the pressure control device can help manage vibration, offering better impact protection which in return improves the mechanical reliability and stability of the battery.

Several implementations of the disclosed technology are described above in reference to the figures. The computing devices on which the described technology may be implemented can include one or more central processing units, memory, input devices (e.g., keyboard and pointing devices), output devices (e.g., display devices), storage devices (e.g., disk drives), and network devices (e.g., network interfaces). The memory and storage devices are computer-readable storage media that can store instructions that implement at least portions of the described technology. In addition, the data structures and message structures can be stored or transmitted via a data transmission medium, such as a signal on a communications link. Various communications links can be used, such as the Internet, a local area network, a wide area network, or a point-to-point dial-up connection. Thus, computer-readable media can comprise computer-readable storage media (e.g., "non-transitory" media) and computer-readable transmission media.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

## Claims

1. A method for manufacturing a battery, with a pressure management device, the method comprising:
cutting a die, into a specified shape, from a rolled wafer;
assembling a battery pack comprising one or more battery cells attached to the die;
forming an adhesive layer on at least one side of the battery pack;
attaching the battery pack to a substrate using the adhesive layer;
forming the pressure management device by:
surrounding foam and/or elastomer insulation around at least a portion of the battery pack; and
curing the foam and/or elastomer insulation; and
adding a cover forming, with the substrate, an enclosure of:
the battery pack, and
the foam and/or elastomer insulation.

2. The method of claim 1, wherein forming the pressure management device further comprises prodding the foam and/or elastomer insulation around the battery pack.

3. The method of claim 1 or claim 2, wherein the adhesive layer is a first adhesive layer and wherein the method further comprises forming a second adhesive layer on the battery pack on a side opposite the first adhesive layer.

4. The method of any preceding claim, wherein the foam and/or elastomer insulation comprises low density compressible foam;
optionally, wherein the portion of the battery pack, that the low density compressible foam surrounds, comprises at least an area between the battery pack and the cover.

5. The method of any preceding claim,
wherein the substrate comprises at least three sides, a first of which the battery pack is attached to using the adhesive layer; and
wherein the portion of the battery pack, that the foam and/or elastomer insulation surrounds, comprises at least A) a first area between the battery pack and the cover, B) a second area between the battery pack and a second of the three sides, and C) a third area between the battery pack and a third of the three sides.

6. The method of any preceding claim,
wherein the battery pack comprises at least six sides, and
wherein the foam and/or elastomer insulation around at least a portion of the battery pack is around at least five of the six sides.

7. The method of any preceding claim, and one or more of the following:
(i) wherein the battery pack comprises at least two battery cells;
(ii) wherein the surrounding foam and/or elastomer insulation has an uncompressed thickness of 5um to 3mm

8. The method of any preceding claim,
wherein at least one side of the substrate is curved; and
wherein at least one side, of at least one of the one or more battery cells, is curved to match the curve of the substrate.

9. A battery assembly with a pressure management device, the battery assembly comprising:
a battery pack comprising one or more battery cells;
a substrate;
an adhesive layer that attaches the battery back to the substrate;
the pressure management device comprising foam and/or elastomer insulation compressed around at least a portion of the battery pack; and
a cover forming, with the substrate, an enclosure of:
the battery pack, and
the foam and/or elastomer insulation.

10. The battery assembly of claim 9, wherein the enclosure is further formed using components, of a device into which the battery assembly is integrated, providing a gap filler within the battery pack.

11. The battery assembly of claim 9 or claim 10, and one or more of the following:
(i) wherein the foam and/or elastomer insulation comprises polyurethane and/or silicone;
(ii) wherein the foam and/or elastomer insulation comprises one or more of: expendable graphite, fullerene, carbon nanotubes, carbon nanofibers, graphene, activated carbon, amorphous carbon, boron nitride, aluminum oxide, aluminum nitride, or any combination thereof.

12. The battery assembly of any one of claims 9 to 11, and one or more of the following:
(i) wherein a density of the foam and/or elastomer insulation is approximately 0.1 gram per cubic centimeter;
(ii) wherein the surrounding foam and/or elastomer insulation has an uncompressed thickness of 5um to 3 mm.

13. The battery assembly of any one of claims 9 to 12, wherein the foam and/or elastomer insulation comprises low density compressible foam;
optionally, wherein the portion of the battery pack, that the low density compressible foam surrounds, comprises at least an area between the battery pack and the cover.

14. The battery assembly of any one of claims 9 to 13,
wherein the substrate comprises at least three sides, a first of which the battery pack is attached to using the adhesive layer; and
wherein the portion of the battery pack, that the foam and/or elastomer insulation surrounds, comprises at least A) a first area between the battery pack and the cover, B) a second area between the battery pack and a second of the three sides, and C) a third area between the battery pack and a third of the three sides.

15. The battery assembly of any one of claims 9 to 14,
wherein at least one side of the substrate is curved; and
wherein at least one side, of at least one of the one or more battery cells, is curved to match the curve of the substrate.
